# DEMANDE DE BREVET EUROPEEN

(11) **EP 1 110 851 A1**
(43) Date de publication de la demande: **27.06.2001**
(21) Numéro de dépôt: 00403595.2
(22) Date de dépôt: 19.12.2000
(51) Int. Cl.: B62D 55/04

(54) **Dispositif d'entraînement à chenille souple pour véhicule à moteur**

(30) Priorité: 24.12.1999 FR 9916486
(71) Demandeur: Otico, 77650 Longueville (FR)
(72) Inventeur: Phely, Olivier, 77650 Sainte Colombe (FR)
(74) Mandataire: Bezault, Jean

(57) **Abrégé**

Un dispositif d'entraînement à chenille souple comprend un ensemble prêt à monter (10), ou kit, propre à être installé en sortie d'un arbre (14) d'une roue motrice (12) du véhicule, en lieu et place de ladite roue motrice, cet ensemble comprenant une bande souple sans fin (18) s'enroulant autour de roues de support (24, 26, 28) et autour d'une roue d'entraînement (46) espacée de l'arbre (14) et reliée audit arbre par un mécanisme de transmission (68) de rapport choisi, les dites roues de support et la roue d'entraînement étant portées par un bâti (16) propre à osciller autour de l'axe (XX) défini par l'arbre (14). Application notamment aux véhicules tout terrain.

## Description

L'invention se rapporte aux véhicules à moteur, notamment aux véhicules tout terrain, tels que les engins agricoles, viticoles et ostréicoles ou les engins de travaux publics et forestiers.

Les véhicules de ce type sont classiquement équipés de roues à pneumatiques qui ont pour inconvénient d'exercer une pression importante au sol et, par conséquent, de tasser le sol ou d'y créer des sillons ou des ornières, spécialement lorsqu'ils circulent sur un terrain meuble.

Pour éviter cet inconvénient, il est connu de remplacer les pneumatiques classiques par des pneumatiques à basse pression qui génèrent des pressions moins importantes sur le sol.

Toutefois, ces pneumatiques à basse pression sont plus encombrants que les pneumatiques classiques et augmentent l'encombrement, notamment en largeur, du véhicule.

Il est connu aussi d'équiper de tels véhicules avec des chenilles souples.

Toutefois, cela nécessite de prévoir des véhicules spécifiques équipés, dès l'origine, de telles chenilles souples.

Il a déjà été envisagé de transformer des véhicules équipés de roues à pneumatique en leur adjoignant des chenilles.

Toutefois, une telle solution nécessite des adaptations importantes, donc coûteuses, qui font que les véhicules ainsi obtenus ne présentent d'avantages substantiels par rapport aux véhicules équipés, dès l'origine, de chenilles.

L'invention a notamment pour but de surmonter les inconvénients précités.

Elle vise notamment à procurer un dispositif d'entraînement à chenille souple qui est susceptible de s'adapter facilement sur des véhicules équipés de roues à pneumatiques, sans nécessiter de transformations importantes.

Elle propose à cet effet un dispositif d'entraînement à chenille souple pour véhicule à moteur, lequel comprend un ensemble prêt à monter, encore appelé "kit", propre à être installé en sortie d'un arbre d'une roue motrice du véhicule, en lieu et place de ladite roue motrice, cet ensemble comprenant une bande souple sans fin s'enroulant autour de roues de support et autour d'une roue d'entraînement espacée de l'arbre et reliée audit arbre par un mécanisme de transmission de rapport choisi, les dites roues de support et la roue d'entraînement étant portées par un bâti propre à osciller autour de l'axe défini par l'arbre.

L'invention procure ainsi un ensemble prêt à être installé en lieu et place d'une roue motrice d'un véhicule à moteur. Du fait que la bande souple sans fin, qui forme chenille, est portée par un bâti oscillant, ce bâti se place automatiquement dans une position où il permet à la bande souple sans fin de s'adapter à la configuration du sol sur lequel se déplace le véhicule.

L'installation d'un tel ensemble est particulièrement simple puisqu'il suffit, à chaque fois, d'enlever une roue motrice du véhicule et de fixer le bâti sur le véhicule. Il suffit alors de disposer de deux ensembles prêts à être installés en lieu et place des deux roues motrices d'un même essieu.

Il en résulte aussi l'avantage que les autres mécanismes du véhicule, en particulier les roues directrices, peuvent être conservés.

Par ailleurs, du fait que la roue d'entraînement, encore appelée roue positive, est espacée de l'arbre et reliée à ce dernier par un mécanisme de transmission, ce dernier peut être réalisé avec un rapport de transmission choisi, ce qui ne serait pas possible si la roue d'entraînement était calée directement sur l'arbre.

Selon une caractéristique avantageuse de l'invention, les roues de support définissent un plan d'appui pour une partie de la chenille en contact avec le sol, et la roue d'entraînement est espacée au dessus de ce plan de contact.

Du fait que le bâti est monté oscillant, ce plan d'appui vient se positionner automatiquement sur le sol, en fonction de la configuration de ce dernier.

Avantageusement, la roue d'entraînement est placée en arrière de l'arbre par rapport à la direction d'avancement du véhicule.

Dans une forme de réalisation préférée de l'invention, le bâti comprend une poutre supportant les roues de support, un palier à roulement fixé à distance de la poutre et propre à osciller autour de l'arbre, et un palier pour la roue d'entraînement.

Le palier à roulement permet ainsi l'oscillation du bâti, et donc de l'ensemble, par rapport à l'axe défini par l'arbre.

Avantageusement, le palier à roulement comprend un manchon fixé à la poutre et traversé par un fût terminé par un flasque propre à être fixé à la structure du véhicule.

Selon une autre caractéristique de l'invention, le dispositif comprend des moyens de réglage pour ajuster la distance du palier à roulement à la poutre.

Cela permet d'utiliser un même ensemble pour remplacer des pneumatiques de dimensions différentes.

Avantageusement, les roues de support comprennent deux roues principales encadrant des roues intermédiaires, et l'une des roues principales constitue une roue de tension pour la bande souple sans fin.

De préférence, le rapport de transmission est choisi pour que la bande souple sans fin ait une vitesse périphérique sensiblement égale à celle de la roue motrice qu'elle remplace.

Le mécanisme de transmission peut comprendre par exemple une chaîne d'entraînement ou encore une cascade de pignons.

Selon encore une autre caractéristique de l'invention, le dispositif comprend un deuxième ensemble analogue à un premier ensemble et propre à être monté vers l'extérieur de manière à procurer une deuxième bande souple sans fin montée en parallèle à l'extérieur d'une première bande souple sans fin.

On constitue ainsi un dispositif avec deux bandes souples sans fin en parallèle procurant des chenilles jumelées.

Dans une première variante, le deuxième ensemble est couplé au premier ensemble de sorte que ces deux ensembles oscillent conjointement et que les deux bandes souples sans fin soient entraînées en synchronisme.

Dans une deuxième variante, le deuxième ensemble est propre à osciller indépendamment du premier ensemble, et la bande souple sans fin du deuxième ensemble est montée folle en étant découplée de l'arbre.

Dans la description qui suit, faite seulement à titre d'exemple, on se réfère aux dessins annexés, sur lesquels :
- la figure 1 est une vue de côté d'un dispositif à chenille souple selon l'invention ;
- la figure 2 est une vue en coupe selon la ligne II-II de la figure 1 ;
- la figure 3 est une vue en coupe selon la ligne III-III de la figure 1 ; et
- la figure 4 est une vue en coupe analogue à celle de la figure 2 dans une variante de réalisation.

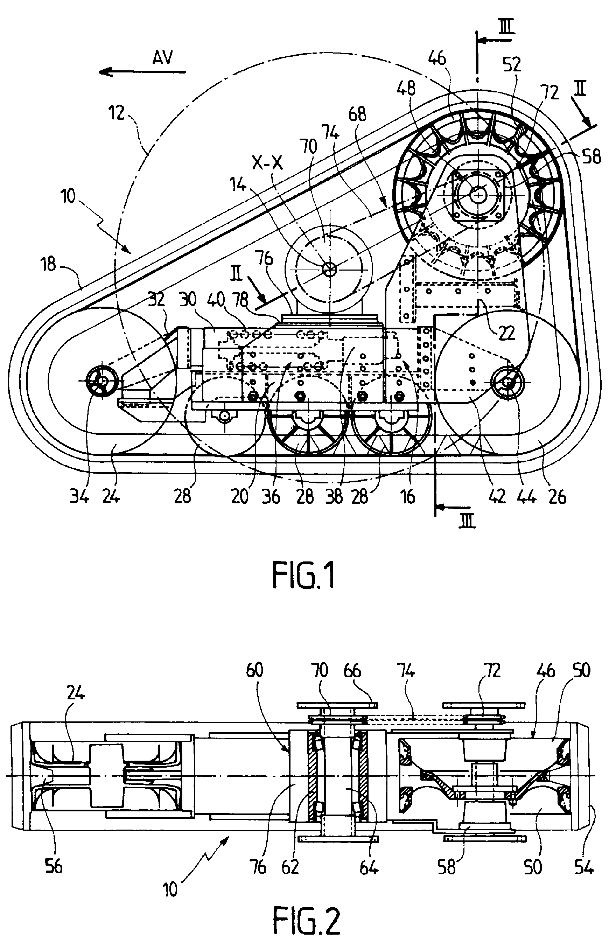

On se réfère d'abord aux figures 1 à 3 qui montrent un dispositif d'entraînement 10 à chenille souple pour un véhicule à moteur tel que, par exemple, un tracteur agricole. Le dispositif 10 est réalisé sous la forme d'un ensemble prêt à monter, encore appelé "kit", propre à être installé en lieu et place d'une roue motrice 12 (représentée en trait interrompu) dudit véhicule. La roue motrice 12 est calée habituellement en sortie d'un arbre 14 d'axe XX faisant partie d'un pont de transmission, habituellement du pont arrière. La direction d'avance (marche avant) du véhicule est représentée par la flèche AV sur la figure 1. On sait qu'une telle roue motrice 12, qui est équipée d'un pneumatique (non représenté), génère des pressions élevées sur le sol qui sont susceptibles de créer un tassement du sol, et parfois des ornières ou sillons, lorsque le véhicule se déplace sur un terrain meuble ou détrempé.

L'invention permet de remédier à cet inconvénient en remplaçant la roue classique 12 par le dispositif 10, lequel comprend un bâti 16 monté oscillant autour de l'axe XX de l'arbre 14 et supportant une bande souple sans fin 18, qui constitue la chenille proprement dite, et qui est entraînée à partir de l'arbre 14.

Le bâti 16 affecte une forme générale en L et il comprend une poutre 20 sensiblement horizontale et un prolongement 22 sensiblement vertical. La poutre 20 porte cinq roues de support, à savoir une roue principale antérieure 24, une roue principale postérieure 26 et trois roues intermédiaires 28. Les roues principales 24 et 26 sont situées aux extrémités de la poutre et ont sensiblement le même diamètre, tandis que les trois roues intermédiaires 28 ont un diamètre plus faible.

La poutre 20 comporte une extrémité antérieure 30 sur laquelle peut coulisser une fourche support 32 portant l'axe 34 de la roue 24. La fourche support 32 est fixée à un organe de liaison porté par un mécanisme tendeur et amortisseur 36 qui est supporté par la poutre 20. Ce mécanisme comprend un vérin 38 et un ressort 40 et il permet de mettre sous tension la fourche 32 en sorte que la roue antérieure 24 joue le rôle de roue de mise en tension de la chenille. En outre, le ressort 40 joue le rôle d'amortisseur pour la chenille, lorsque celle-ci roule sur des obstacles. La poutre 20 comporte de plus une extrémité postérieure 42 formant pivot pour l'axe 44 de la roue 26.

La structure générale de la poutre avec ses roues et son mécanisme tendeur et amortisseur est connue de façon générale par le brevet FR-A-2 768 387 (97 11398) au nom de la Demanderesse.

Le prolongement vertical 22 du bâti 16 forme pivot pour une roue d'entraînement 46, encore appelée "roue positive", qui est placée sensiblement au-dessus de la roue principale postérieure 26. Elle possède un axe 48 qui s'étend parallèlement aux axes des roues 24, 26, 28 et parallèlement à l'axe XX de l'arbre 14, tout en étant située à distance de l'arbre 14.

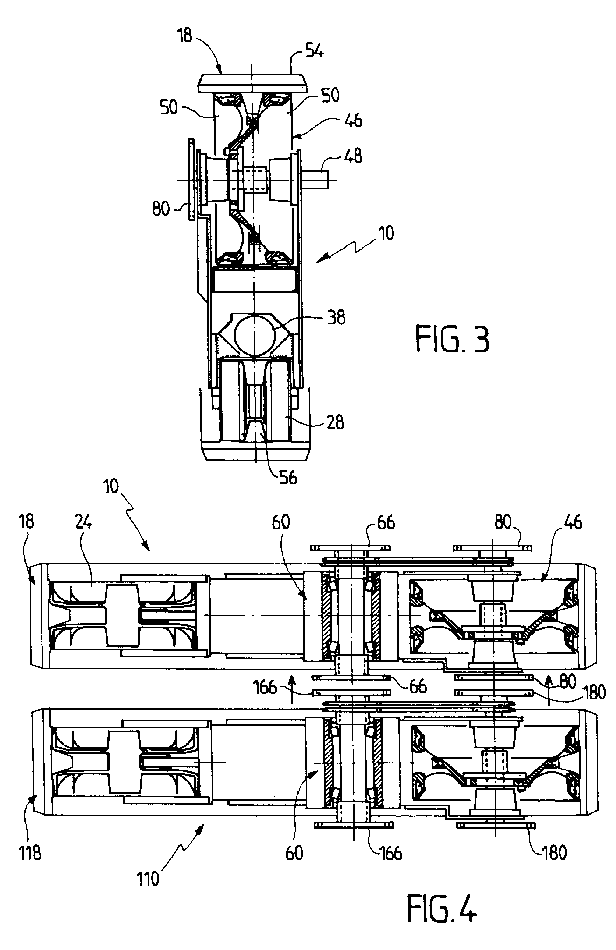

La roue 46 comprend deux jantes 50 (figures 2 et 3) réunies entre elles, à intervalles réguliers, par des taquets d'entraînement 52 (figure 1) disposés parallèlement entre eux à la périphérie de la roue et parallèlement aux génératrices de cette dernière. Ces taquets sont destinés à venir s'engrener avec l'intérieur de la bande souple sans fin 18.

La bande souple sans fin est réalisée avantageusement en un matériau élastomère, par exemple à base de caoutchouc naturel, renforcé intérieurement par des armatures (non représentées). La bande sans fin comporte extérieurement une surface de roulement munie de crampons 54 (figures 2 et 3).

La bande souple sans fin est munie intérieurement d'une rangée de plots 56 (figures 2 et 3) situés dans le sens de la longueur de la bande et distants entre eux d'un pas constant. Ces plots ont sensiblement la forme d'une pyramide comme décrit dans le brevet FR-A-2 711 959 (93 13211) au nom de la Demanderesse.

Les taquets 52 de la roue d'entraînement 46 sont destinés à venir s'engrener dans les espaces vides délimités entre les plots 56 pour entraîner la chenille. Cette chenille affecte en vue de côté (figure 1) une forme générale triangulaire dont un premier côté est sensiblement horizontal et s'appuie sur les roues de support 24, 26 et 28 pour former un plan d'appui en contact avec le sol, dont un deuxième côté est sensiblement vertical et s'appuie sur la roue principale 26 et sur la roue d'entraînement 46, et dont un troisième côté est oblique et s'appuie sur la roue d'entraînement 46 et sur la roue principale 24.

Le prolongement 22 du bâti porte un palier 58 pour la roue d'entraînement 46. Par ailleurs, le bâti 16 porte, à distance de la poutre 20, un palier à roulement 60 constitué d'un manchon 62 fixé à la poutre 20 et d'un fût 64, monté à rotation à l'intérieur du manchon 62; Ce fût est terminé par deux flasques 66 de forme générale circulaire, dont l'un est propre à être fixé (par des boulons non représentés) sur la structure du véhicule, de sorte que l'axe de rotation du palier à roulements 60 coïncide avec l'axe XX de l'arbre 14.

Dans l'exemple, le flasque 66 est destiné à être fixé sur le pont arrière du véhicule. Il en résulte que le bâti 16 peut osciller autour de l'axe XX en sorte que le plan d'appui de la chenille, défini par les roues de support 24, 16 et 28, peut s'adapter à la configuration du sol sur lequel se déplace le véhicule.

Le dispositif 10 comprend en outre un mécanisme de transmission 68 qui relie la sortie de l'arbre 14 à l'axe 48 de la roue d'entraînement 46. Dans l'exemple représenté le mécanisme 68 comprend une poulie 70 calée sur l'arbre moteur 14, une poulie 72 calée sur l'axe 48 de la roue d'entraînement 46 et une chaîne 74 s'enroulant autour des poulies 70 et 72. Le mécanisme de transmission 68 définit un rapport de transmission choisi de telle sorte que la bande souple sans fin 18 ait une vitesse périphérique sensiblement égale à celle de la roue motrice 12 qu'elle remplace.

Ce rapport de transmission est défini en tenant compte du rayon utile de la roue motrice 12, c'est-à-dire du rayon sous charge correspondant au pneu écrasé.

Bien entendu, il est possible de choisir d'autres mécanismes de transmission, en particulier des mécanismes composés de pignons disposés en cascade, ce qui permet d'utiliser un même bâti pour différents types de chenilles.

Il est à noter par ailleurs que le palier à roulement 60 comprend une semelle horizontale 76 fixée sur une plaque d'appui 78 disposée horizontalement sur la poutre 20. Il est possible de disposer, entre la semelle 76 et la plaque 78, une cale d'épaisseur variable pour faire varier la distance entre le plan d'appui de la chenille et l'axe XX, ce qui permet d'utiliser un même bâti pour des roues de diamètres différents.

Il suffira à chaque fois de faire varier la distance précitée et de choisir le mécanisme de transmission pour qu'il présente le rapport de transmission voulu.

Comme on peut le voir sur la figure 1, le dispositif 10 de l'invention présente un encombrement compatible avec celui de la roue 12 qu'il remplace. Ce dispositif présente sensiblement la même largeur que la roue et il s'étend sur une longueur supérieure, mais surtout vers l'avant. La partie arrière de la chenille dépasse peu de l'aplomb de la roue 12 et le dispositif peut être installé en conservant le garde-boue d'origine (non représenté) du tracteur.

Ce dispositif offre l'avantage de présenter une surface d'appui importante par rapport à celle de la roue qu'il remplace, ce qui diminue notablement la pression exercée au sol.

En outre, du fait que le bâti peut osciller, le plan d'appui de la chenille s'adapte à la configuration du sol sur lequel se déplace le véhicule et forme en même temps un dispositif anti-cabrage. Il est à noter que des butées (non représentées) sont avantageusement prévues pour limiter l'angle de débattement du bâti autour de l'axe XX.

Le dispositif 10 constitue ainsi un ensemble prêt à monter, encore appelé "kit", qui peut être facilement installé pour remplacer une roue motrice d'un tracteur existant. Il peut aussi être installé dès l'origine sur un tel véhicule. Il est possible aussi d'utiliser un même ensemble susceptible de s'adapter sur différents véhicules, du moment qu'une compatibilité existe.

Pour adapter l'ensemble, il suffit de démonter la roue qu'il doit remplacer et fixer le flasque 66 sur le pont du véhicule tout en couplant la sortie de l'axe 14 avec le mécanisme de transmission.

Dans la forme de réalisation des figures 1 à 3, on peut ainsi utiliser deux ensembles 10 remplaçant respectivement les deux roues motrices d'un même essieu, du côté droit et du côté gauche.

On se réfère maintenant à la figure 4 qui montre une variante de réalisation dans laquelle le dispositif comprend un premier ensemble 10 analogue à celui qui vient d'être décrit précédemment et un deuxième ensemble 110 propre à être monté vers l'extérieur par rapport au premier ensemble 10. Ce deuxième ensemble est réalisé de façon identique ou similaire. Ces deux ensembles sont fixés respectivement par des flasques. le flasque 66 du palier à roulement 60 de l'ensemble 10, situé vers l'extérieur, est fixé sur un flasque homologue 166 de l'ensemble 110, situé vers l'intérieur.

En outre le palier 48 de la roue d'entraînement 46 du premier ensemble 10 comprend deux flasques 80, dont l'un, situé vers l'extérieur, est propre à être fixé contre un flasque intérieur homologue 180 de l'ensemble 10.

Il en résulte que ces deux ensembles peuvent osciller conjointement. Le deuxième ensemble 110 comprend un mécanisme d'entraînement analogue, si bien que l'on procure ainsi deux bandes souples sans fin 18 et 118 qui sont entraînées en synchronisme, ce qui augmente la surface en contact avec le sol et permet par conséquent de diminuer davantage la pression exercée sur le sol.

Dans une variante de réalisation (non représentée) il est possible de réaliser le deuxième ensemble 110 de sorte qu'il peut osciller indépendamment du premier ensemble et que la bande souple sans fin correspondante 118 soit montée folle en étant découplée de l'arbre.

Dans ce cas, la bande souple sans fin 118 n'est pas entraînée positivement et sert essentiellement à augmenter la surface d'appui au sol.

Bien entendu, l'invention n'est pas limitée aux formes de réalisation décrites précédemment à titre d'exemples et s'étend à d'autres variantes.

On comprendra qu'il est envisageable d'adjoindre éventuellement un troisième ensemble susceptible d'osciller conjointement ou indépendamment des deux premiers ensembles.

L'invention trouve une application générale aux dispositifs à moteur en particulier aux véhicules tout terrain.

## Revendications

1. Dispositif d'entraînement à chenille souple pour véhicule à moteur,
caractérisé en ce qu'il comprend un ensemble prêt à monter (10), ou kit, propre à être installé en sortie d'un arbre (14) d'une roue motrice (12) du véhicule, en lieu et place de ladite roue motrice, cet ensemble comprenant une bande souple sans fin (18) s'enroulant autour de roues de support (24, 26, 28) et autour d'une roue d'entraînement (46) espacée de l'arbre (14) et reliée audit arbre par un mécanisme de transmission (68) de rapport choisi, les dites roues de support et la roue d'entraînement étant portées par un bâti (16) propre à osciller autour de l'axe (XX) défini par l'arbre (14).

2. Dispositif selon la revendication 1, caractérisé en ce que les roues de support (24, 26, 28) définissent un plan d'appui pour une partie de la chenille en contact avec le sol et en ce que la roue d'entraînement (46) est espacée au dessus de ce plan de contact.

3. Dispositif selon la revendication 2, caractérisé en ce que la roue d'entraînement (46) est placée en arrière de l'arbre (14) par rapport à la direction d'avancement (AV) du véhicule.

4. Dispositif selon l'une des revendications 1 à 3, caractérisé en ce que le bâti (16) comprend une poutre (20) supportant les roues de support (24, 26, 28), un palier à roulement (60) fixé à distance de la poutre et propre à osciller autour de l'arbre (14) et un palier (58) pour la roue d'entraînement (46).

5. Dispositif selon la revendication 4, caractérisé en ce que le palier à roulement (60) comprend un manchon fixe (62) fixé à la poutre porteuse (20) et traversé par un fût (64) terminé par un flasque (66) propre à être fixé à la structure du véhicule.

6. Dispositif selon l'une des revendications 4 et 5, caractérisé en ce qu'il comprend des moyens de réglage pour ajuster la distance du palier à roulement (60) à la poutre (20).

7. Dispositif selon l'une des revendications 1 à 6, caractérisé en ce que les roues de support (24, 26, 28) comprennent deux roues principales (24, 26) encadrant des roues intermédiaires (28), et en ce que l'une (24) des roues principales constitue une roue de tension pour la bande souple sans fin (18).

8. Dispositif selon l'une des revendications 1 à 7, caractérisé en ce que le rapport de transmission est choisi pour que la bande souple sans fin (18) ait une vitesse périphérique sensiblement égale à celle de la roue motrice (12) qu'elle remplace.

9. Dispositif selon l'une des revendications 1 à 8, caractérisé en ce que le mécanisme de transmission (68) comprend une chaîne d'entraînement (74).

10. Dispositif selon l'une des revendications 1 à 8, caractérisé en ce que le mécanisme de transmission (68) comprend une cascade de pignons.

11. Dispositif selon l'une des revendications 1 à 10, caractérisé en ce qu'il comprend un deuxième ensemble (110) analogue à un premier ensemble (10) et propre à être monté vers l'extérieur de manière à procurer une bande sans fin (118) montée en parallèle à l'extérieur d'une première bande sans fin (18).

12. Dispositif selon la revendication 11, caractérisé en ce que le deuxième ensemble (110) est couplé au premier ensemble (10) de sorte que les deux ensembles oscillent conjointement et que les deux bandes sans fin (18, 118) soient entraînées en synchronisme.

13. Dispositif selon la revendication 11, caractérisé en ce que le deuxième ensemble (110) est propre à osciller indépendamment du premier ensemble (10) et en ce que la bande sans fin (118) du deuxième ensemble est montée folle en étant découplée de l'arbre.
